# FASCICULE DE BREVET EUROPEEN

(11) **EP 1 108 932 B1**
(45) Date de publication et mention de la délivrance du brevet: **19.11.2003**
(21) Numéro de dépôt: 99870259.1
(22) Date de dépôt: 16.12.1999
(51) Int. Cl.: F16K 11/078, F16K 31/52

(54) **Vanne, en particulier vanne à clapet**
Ventil, insbesondere Klappenventil
Valve, especially flap - valve

(43) Date de publication de la demande: 20.06.2001
(73) Titulaire: Techspace Aero S.A., 4041 Herstal (BE)
(72) Inventeur: Pierson, Michel, 4470 Saint-Georges (BE)
(74) Mandataire: Van Malderen, Joelle

(56) Documents cités:
- DE-A- 1 939 711
- US-A- 3 883 111
- US-A- 4 185 659
- US-A- 4 738 281
- US-A- 4 887 642

## Description

### Objet de l'invention

La présente invention se rapporte à une vanne comprenant un dispositif d'actionnement sous la forme d'un support mobile solidaire d'une tige de commande, telle qu'une vanne à clapet.

### Etat de la technique

Les vannes à clapet sont bien connues, et sont essentiellement constituées d'un clapet mobile dans le corps de la vanne et solidaire d'une tige de commande, qui se ferme lors d'un effort de compression sur le clapet et s'ouvre lors d'un effort de traction sur ce même clapet.

Afin d'assurer une bonne étanchéité de ladite vanne lors de la fermeture, il était déjà connu de proposer un système de rotule qui permet la répartition uniforme de la pression exercée par la tige de commande sur toute la surface de contact dudit clapet. Ceci permet de s'affranchir d'un défaut éventuel d'alignement et/ou de perpendicularité de l'effort de compression par rapport audit clapet.

Cette rotule est habituellement présentée sous la forme d'un ménisque sphérique qui s'appuie sur une surface plane ou conique du clapet mobile. La tige est dans ce cas solidaire de ladite rotule.

Néanmoins, en cas d'un effort de traction sur ladite tige de commande pour ouvrir la vanne, éventuellement effectué par compensation hydraulique ou autre, la répartition des forces sur la surface du clapet est souvent tributaire de la précision d'alignement du dispositif de retenue qui solidarise la tige au clapet. On observe de ce fait que souvent, l'effort de traction n'est plus centré.

Le document US-A-4 185 659 décrit un robinet mélangeur à manche unique. Ce robinet comprend une valve à deux plateaux, l'un mobile et l'autre fixe, lesdits plateaux étant disposés de façon à ce que leur surface de contact soit dans une direction parallèle à l'axe du corps du robinet. Le plateau mobile est susceptible de se déplacer et de pivoter autour d'un pivot déplaçable parallèlement à l'axe du robinet. Les éléments de la valve sont contenus dans un manchon ressemblant à une cartouche.

Le document US-A-3 883 111 décrit une valve du type clapet à retenue en forme de cuvette et montée sur un bras par un joint à rotule et à genouillère. Le bras est fixé à une tige qui peut être actionnée manuellement pour l'ouverture et la fermeture de la valve à retenue. Lorsqu'elle est en position fermée, la valve à retenue peut pivoter librement dans un sens jusqu'à atteindre sa position d'ouverture et un bras indicateur précise à tout moment la position de la valve à clapet. Lorsque la valve est ouverte et qu'un fluide s'écoule dans le canal d'écoulement de la valve, une ailette située dans la partie inférieure de la valve à clapet empêche toute rotation libre du clapet autour du joint à rotule et à genouillère qui le relie au bras.

Le document US-A-4 738 281 décrit une valve de mélange pour mélanger deux fluides, destinée en particulier au domaine des sanitaires pour mélanger de l'eau chaude et de l'eau froide. Cette valve comprend deux plateaux en céramique, l'un fixe, l'autre mobile, ces plateaux étant montés à l'intérieur d'un corps qui abrite également un levier à bille couplé au plateau mobile par une projection décentrée, la forme du plateau mobile qui n'a pas de trou, est approximativement celle d'un trapèze avec des extrémités arrondies.

Le document US-A-4 887 642 décrit une valve de mélange à manche unique pour mélanger de l'eau chaude et de l'eau froide dans certaines proportions et selon un certain débit. Ladite valve comprend deux disques, l'un de ces disques étant capable à la fois de tourner contre l'autre disque et de se déplacer transversalement par rapport à lui. Le disque mobile est couplé par un joint à rotule à un manche apte à tourner et à s'incliner. L'axe de rotation du disque mobile et du manche à travers le joint à rotule pendant la rotation dudit disque mobile, et l'axe d'inclinaison dudit manche par rapport audit disque mobile au niveau du joint à rotule pendant le mouvement transversal dudit disque mobile, sont tels qu'essentiellement toutes les forces exercées par le manche sur ledit joint à rotule sont radiales par rapport audit joint plutôt que longitudinales le long de l'axe de la valve, ce qui diminue les forces de friction entre les disques de la valve et diminue le risque de les endommager.

Le document DE-A-1939711 donne un autre exemple d'un mélangeur à manche unique pour obtenir de l'eau chaude, froide ou un mélange des deux.

### Buts de l'invention

La présente invention vise à remédier à ce problème de manque de centrage lors de l'application des forces aussi bien à la fermeture qu'à l'ouverture de la vanne.

La présente invention vise à proposer une solution qui permet d'accroître les tolérances d'usinage des différentes pièces constituant la vanne à clapet.

### Principaux éléments caractéristiques de l'invention

La présente invention se rapporte à une vanne comprenant un dispositif d'actionnement sous la forme d'un support mobile solidaire d'une tige de commande et un élément présentant des premiers moyens jouant le rôle de rotule de répartition des efforts de compression lors de la fermeture de la vanne, caractérisée en ce que ledit dispositif d'actionnement comprend un élément présentant des seconds moyens jouant le rôle de rotule de répartition des efforts de traction lors de l'ouverture de la vanne.

Dans ce dispositif d'actionnement de la vanne, l'élément présentant les premiers moyens jouant le rôle de rotule et l'élément présentant les seconds moyens jouant le rôle de rotule peuvent être distincts ou correspondre au même élément.

De préférence, le support mobile est un clapet d'une vanne à clapet.

Plusieurs alternatives existent pour les moyens qui jouent de rôle de rotule de répartition des efforts. Il s'agit en général de proposer deux surfaces qui présentent une surface de contact aussi petite que possible. Il s'agit par exemple d'une surface convexe et de préférence sphérique tangente à un plan, de deux surfaces cylindriques présentant des axes non parallèles et ayant de ce fait un seul point de contact ou d'une surface conique perpendiculaire à un plan.

Il est souhaitable que la surface de contact où s'appliquent les efforts de traction ou de compression soit nettement inférieure à la section de la tige de commande.

De manière particulièrement avantageuse, il est recommandé de placer le centre des surfaces de contact sur l'axe de symétrie de la tige de commande. Plus particulièrement, dans le cas de surfaces convexes, on dispose les centres de courbure sur l'axe de la tige de commande.

Selon une forme préférée d'exécution, les premiers moyens sont constitués par une surface sphérique ayant son centre de courbure opposé au support mobile et s'appuyant sur une surface plane, tandis que les seconds moyens sont également constitués par une surface sphérique mais ayant son centre de courbure dirigé vers le support mobile et s'appuyant sur une autre surface plane.

Selon une autre forme préférée d'exécution, les seconds moyens peuvent être constitués par une surface conique, éventuellement terminée par une faible plature, ayant également son centre de courbure dirigé vers le support mobile et s'appuyant sur une surface plane.

### Brève description des dessins

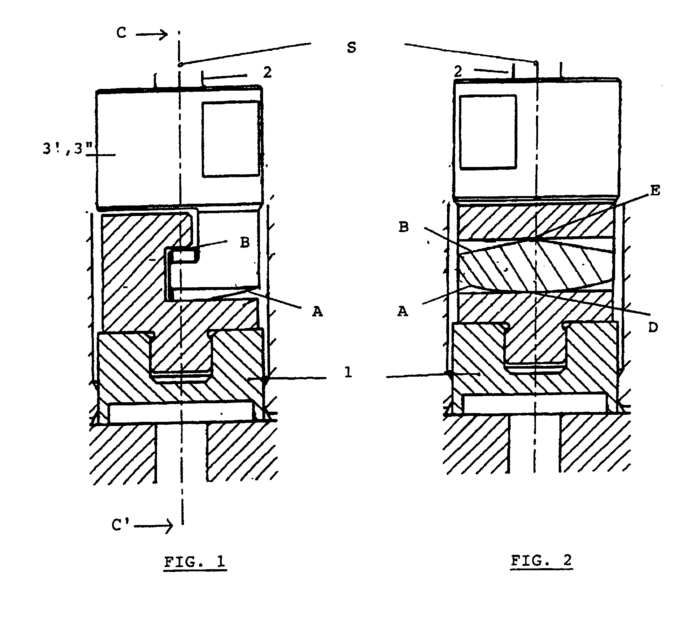

Les figures 1 et 2 représentent respectivement une vue en coupe longitudinale et une section selon le plan C-C' d'une vanne à clapet selon la présente invention.

### Description d'une forme d'exécution préférée de l'invention

Les figures 1 et 2 représentent une forme d'exécution particulièrement préférée d'une vanne à clapet comprenant les caractéristiques principales de la présente invention.

Dans cette forme préférée d'exécution de l'invention, la vanne est une vanne à clapet. Le clapet constitue le support mobile 1 du dispositif d'actionnement et est solidaire d'une tige de commande 2. Le dispositif d'actionnement comprend en outre un premier élément 3' et un deuxième élément 3". Le premier élément 3' comporte une première surface convexe A qui, associée à la surface plane A' sur laquelle elle s'appuie, permet de jouer le rôle d'une rotule de répartition des efforts de compression lors de la fermeture de la vanne. La surface A est une surface sphérique dont le centre de courbure est opposé au support mobile 1. La surface de contact D entre A et A' où s'appliquent les efforts de compression est nettement inférieure à la section de la tige de commande 2 et son centre est disposé sur l'axe de symétrie S de la tige de commande 2.

Le deuxième élément 3'' comporte une deuxième surface convexe B qui, associée à la surface plane B' sur laquelle elle s'appuie, permet de jouer le rôle d'une rotule de répartition des efforts de traction lors de l'ouverture de la vanne. Cette surface B est dans l'exemple considéré une surface conique tronquée présentant une faible plature opposée au support mobile 1. La surface de contact E entre B et B' où s'appliquent les efforts de traction est nettement inférieure à la section de la tige de commande 2 et son centre est disposé sur l'axe de symétrie S de la tige de commande 2. Dans cette forme d'exécution préférée de l'invention, les éléments 3' et 3'' constituent un seul dispositif.

Grâce à ce dispositif d'actionnement de la vanne à double rotule, les forces de traction et de compression sont donc transmises sur l'axe de symétrie de la tige de commande et non pas sur la périphérie de l'axe comme dans les cas classiques. Ceci permet de s'affranchir d'un défaut éventuel d'alignement des différentes pièces du système et/ou d'un défaut éventuel de perpendicularité de l'effort de compression et de traction par rapport audit clapet, lors de la fermeture de la vanne et de son ouverture respectivement. On a ainsi un contrôle plus sûr du fonctionnement de la vanne et donc un meilleur contrôle sur l'écoulement du fluide.

## Revendications

1. Vanne comprenant un dispositif d'actionnement sous la forme d'un support mobile (1) solidaire d'une tige de commande (2) associée à des premiers moyens (3') jouant le rôle de rotule de répartition des efforts de compression lors de la fermeture de la vanne, et à des seconds moyens (3'') jouant le rôle de rotule de répartition des efforts de traction lors de l'ouverture de la vanne, **caractérisée en ce que** les premiers moyens jouant le rôle de rotule de répartition des efforts de compression et les seconds moyens jouant le rôle de rotule de répartition des efforts de traction sont disposés sur un même élément (3).

2. Vanne selon la revendication 1, **caractérisée en ce que** les premiers moyens sont constitués par deux surfaces (A et A') présentant une surface de contact (D) tandis que les seconds moyens sont constitués par deux autres surfaces (B et B') présentant également une surface de contact (E), les surfaces de contact (D et E) étant nettement inférieures à la section de la tige de commande (2).

3. Vanne selon la revendication 1 ou 2, **caractérisée en ce que** les centres desdites surfaces de contact (D,E) sont disposés sur l'axe de symétrie (S) de la tige de commande (2).

4. Vanne selon la revendication 2 ou 3, **caractérisée en ce que** les premiers moyens se présentent essentiellement sous la forme d'une surface sphérique (A) ayant son centre de courbure opposé au support mobile (1) et s'appuyant sur une surface plane (A') tandis que les seconds moyens se présentent essentiellement sous la forme d'une surface sphérique (B) ayant son centre de courbure dirigé vers le support mobile (1) et s'appuyant sur une autre surface plane (B').

5. Vanne selon la revendication 2 ou 3, **caractérisée en ce que** les premiers moyens se présentent essentiellement sous la forme d'une surface sphérique (A) ayant son centre de courbure opposé au support mobile (1) et s'appuyant sur une surface plane (A') tandis que les seconds moyens se présentent essentiellement sous la forme d'une partie conique tronquée (B) terminée par une faible plature se trouvant à l'opposé du support mobile (1) et s'appuyant sur une autre surface plane (B').

6. Vanne selon la revendication 2 ou 3, **caractérisée en que** les premiers moyens et/ou les seconds moyens se présentent essentiellement sous la forme d'une surface cylindrique s'appuyant sur une autre surface cylindrique d'axe non parallèle à la première surface.

7. Vanne selon la revendication 1, **caractérisée en ce que** ledit support mobile (1) est un clapet d'une vanne à clapet.

## Claims

1. Valve comprising an activation device in the form of a mobile support (1) attached to a control rod (2) associated to first means (3') acting as a distribution joint for the compression stresses while the valve is closed, and to second means (3'') acting as a distribution joint for the traction stresses when the gate is opened, **characterised in that** the first means acting as a distribution joint for the compression stresses and the second means acting as a distribution joint for the traction stresses are located on a same element (3).

2. Valve according to Claim 1, **characterised in that** the first means is essentially composed of two surfaces (A and A') having a contact surface (D) while the second means is composed of two other surfaces (B and B') also having a contact surface (E), the contact surfaces (D and E) being clearly lesser than the section of the control rod (2).

3. Valve according to Claim 1 or 2, **characterised in that** the centres of said contact surfaces (D, E) are located on the axis (S) of symmetry of the control rod (2).

4. Valve according to Claim 2 or 3, **characterised in that** the first means is essentially in the form of a spherical surface (A) having its centre of curvature opposite the mobile support (1) and leaning on a flat surface (A') while the second means is essentially in the form of a spherical surface (B) having its centre of curvature facing the mobile support (1) and leaning on another flat surface (B').

5. Valve according to Claim 2 or 3, **characterised in that** the first means is essentially in the form of a spherical surface (A) having its centre of curvature opposite the mobile support (1) and leaning on a flat surface (A') while the second means is essentially in the form of a truncated conical part (B) ending with a slight flatness opposite the mobile support (1) and leaning on another flat surface (B').

6. Valve according to Claim 2 or 3, **characterised in that** the first and/or second means is/are essentially in the form of a cylindrical surface leaning on another cylindrical surface with an axis that is not parallel to the first surface.

7. Valve according to Claim 1, **characterised in that** said mobile support (1) is a flap of a flap-valve.

## Patentansprüche

1. Ventil mit einer Betätigungsvorrichtung in Form eines beweglichen Trägers (1), der mit einer Steuerstange (2) fest verbunden ist, die mit ersten Elementen (3') verbunden ist, die die Funktion eines Kugelgelenks zur Verteilung der Druckkräfte beim Schließen des Ventils ausüben, und mit zweiten Elementen (3"), die die Funktion eines Kugelgelenks zur Verteilung der Zugkräfte beim Öffnen des Ventils ausüben, **dadurch gekennzeichnet, dass** die ersten Elemente, die die Funktion eines Kugelgelenks zur Verteilung der Druckkräfte ausüben, und die zweiten Elemente, die die Funktion eines Kugelgelenks zur Verteilung der Zugkräfte ausüben, auf demselben Bauteil angeordnet sind (3).

2. Ventil nach Anspruch 1, **dadurch gekennzeichnet, dass** die ersten Elemente aus zwei Flächen (A und A') gebildet werden, die eine Kontaktfläche (D) aufweisen, während die zweiten Elemente aus zwei anderen Flächen (B und B') gebildet werden, die ebenfalls eine Kontaktfläche (E) aufweisen, wobei die Kontaktflächen (D und E) deutlich kleiner als der Querschnitt der Steuerstange (2) sind.

3. Ventil nach Anspruch 1 oder 2, **dadurch gekennzeichnet, dass** die Mittelpunkte dieser Kontaktflächen (D, E) auf der Symmetrieachse (S) der Steuerstange (2) liegen.

4. Ventil nach Anspruch 2 oder 3, **dadurch gekennzeichnet, dass** die ersten Elemente im wesentlichen eine kugelförmige Fläche (A) darstellen, deren Krümmungsmittelpunkt dem beweglichen Träger (1) gegenüberliegt und auf einer ebenen Fläche (A') aufliegt, während die zweiten Elemente im wesentlichen eine kugelförmige Fläche (B) darstellen, deren Krümmungsmittelpunkt zum beweglichen Träger (1) hin gerichtet ist und auf einer anderen ebenen Fläche (B') aufliegt.

5. Ventil nach Anspruch 2 oder 3, **dadurch gekennzeichnet, dass** die ersten Elemente im wesentlichen eine kugelförmige Fläche (A) darstellen, deren Krümmungsmittelpunkt dem beweglichen Träger (1) gegenüberliegt und auf einer ebenen Fläche (A') aufliegt, während die zweiten Elemente im wesentlichen die Form eines Kegelstumpfs (B) haben, der mit einer leicht abgeflachten Fläche abschließt, die dem beweglichen Träger (1) gegenüber liegt und auf einer anderen ebenen Fläche (B') aufliegt.

6. Ventil nach Anspruch 2 oder 3, **dadurch gekennzeichnet, dass** die ersten Elemente und/oder die zweiten Elemente im wesentlichen eine zylinderförmige Fläche bilden, die auf einer anderen zylinderförmigen Fläche aufliegen, deren Achse nicht parallel zur ersten Fläche ist.

7. Ventil nach Anspruch 1, **dadurch gekennzeichnet, dass** der besagte bewegliche Träger (1) die Klappe eines Klappenventils ist.
